# EUROPEAN PATENT SPECIFICATION

(11) **EP 2 554 583 B1**
(45) Date of publication and mention of the grant of the patent: **26.04.2017**
(21) Application number: 12460044.6
(22) Date of filing: 23.07.2012
(51) Int. Cl.: F24F 3/16, C08J 7/12, F24F 13/06

(54) **A method of giving bactericidal and fungicidal properties to ducts of ventilation systems and a ventilation system duct for applying the method**
Verfahren zum Verleihen bakterizider und fungizider Eigenschaften an Kanäle von Belüftungssystemen und Belüftungssystemkanal zur Anwendung des Verfahrens
Procédé permettant d'induire des propriétés bactéricides et fongicides à des conduits de systèmes de ventilation et système de ventilation conduit applicant le procédé

(30) Priority: 02.08.2011 PL 39584511
(43) Date of publication of application: 06.02.2013
(73) Proprietor: Creo Sp. z o.o., 35 210 Rzeszów (PL)
(72) Inventor: Szczepanik, Waldemar, 30- 243 Kraków (PL); Doros, Wieslaw, 35 - 210 Rzeszów (PL); Doros, Teodora, 35 - 210 Rzeszów (PL); Kuziara, Wojciech, 35 - 629 Rzeszów (PL)
(74) Representative: Warzybok, Tadeusz

(56) References cited:
- US-A- 5 835 840
- US-B1- 6 613 277

## Description

The subject of the present invention consists in a method of giving bactericidal and fungicidal properties to ducts of ventilation systems and the ventilation system duct for applying this method, especially in public buildings such as hospitals, laboratories, sanatoriums as well as in the multi-family building industry.

Patent description DE102005032616A1 reveals parts molded from plastics including, among other things, pipes provided on their inner surface with 9-40 µm thick multicomponent coatings deposited, depending on the profile of a part, by means of dulling, crimping, drawing, casting, rolling, immersing, tumbling, flow coating, spraying, or sprinkling. Formulations of the coatings include appropriate amounts of polyacrylate, extender in the form of e.g. silicon dioxide, thinner in the form of e.g. polyalcohol acrylic ester, vinyl silane, photoinitiator and modifier selected from the group of silver salts or metallic silver that give the molded parts anti-microbial properties.

Description of Polish patent application P-383968 reveals also an invention in which a powder is used based on silica carrier grains with diameter from 450 to 650 nm containing nanoparticles of metallic silver with diameters of up to 20 µm for production of many different bio-active materials, including plastics with biocidal and biostatic properties.

A method of giving bactericidal and fungicidal properties known from patent description of Polish invention application No. P-381732, consists in that in ventilation ducts coated with compositions containing nanoparticles, especially silver and zinc nanoparticles, air filters, preferable textile ones, are located also covered with preparations and compositions containing silver or zinc nanoparticles. According to the method, inner surfaces of ventilation ducts are covered with a composition containing 1-10000 ppm of metal nanoparticles, preferably of silver and/or mixes of metals, especially metallic silver and zinc showing the biocidal effect, applied by means of any technique, e.g. by means of varnishing with a paint containing 100-1000 ppm metallic silver nanoparticles with biocidal effect with grain dimensions ranging from 1 to 100 nm or are coated with an aerosol containing 10-100 ppm of metallic silver nanoparticles with biocidal effect suspended in propyl alcohol. This additional coating of ventilation ducts with compositions containing metal nanoparticles improved bactericidal and fungicidal effectiveness of ventilation and air conditioning systems. An inconvenience and at the same time a flaw of using this kind of method is relatively short-term bactericidal and fungicidal effectiveness of air filters covered with preparations or compositions containing silver and/or zinc nanoparticles mounted in ventilation system ducts lasting from one to three months, which requires exercising a continuous supervision over such systems and repeating the operation of soaking the filters with these compositions or replacing the filters with new ones, which in turn increases operating costs of such ventilation systems.

Patent description No. US6613277B1 reveals an air purification system comprising a housing having as irradiation chamber, means for passing air through the irradiation chamber, an UV radiation generator mounted in the irradiation chamber for irradiating the air passing therethrough, and comprising at least one radiation source, wherein the generator further defininf at least two distinct radiation emitting regions producing differing spectra of ultraviolet radiation. Furthermore the system has an optical isolator disposed between the distinct emitting regions, the isolator physically separating the emitting regions, the isolator further providing that the radiation from one of said emitting regions is prevented from interacting with any radiation from another emitting region, wherein the isolator is coated with a predetermined quantity of a material selected from the group consisting of silver, silver oxide, copper, a cooper oxide, microcrystalline titanium and titianium dioxide.

Furthermore a system for destroying bacteria and VOC's in a bulding ventilation system known from patent description No. US5835840 that has ventilation ducts leading to and from an air conditioning unit. The system comprising of a main duct leading from said unit and carrying an airstream therethrough, a coated surface in said duct and having a particular length in the direction of air flow, a titanium dioxide coating on said surface, an ultraviolet light source for directing ultraviolet light on said surface as said airstream passes therethrough, a humidity detector in said duct and first means responsive to said detector for controlling the moisture of said airstream prior to its entering the area of said coated surface and second means for controlling the flow speed of said airstream to control the amount of time each volumetric unit of air dwells in the vicinity of said catalytic surface while being subjected to said ultraviolet light.

The purpose of the present invention is to provide a method of giving bactericidal and fungicidal properties to ducts of ventilation systems eliminating flaws and inconveniences of the methods known in the prior art. A further purpose of the present invention is to provide a ventilation system duct design replacing the air filters covered with preparations or compositions containing silver and/or zinc nanoparticles mounted in such systems in the prior art with other electronic technical means applied in them.

The essence of the idea of giving bactericidal and fungicidal properties to ventilation system ducts made of tubular elements inner surfaces of which are covered with a thin layer of a silver oxide or titanium oxide or zinc oxide with antiseptic properties and equipped with a source of UV radiation to which the air draw into these ducts is exposed consists in that the air drawn in at the inlet to the duct of a ventilation system is exposed to ozone-producing strong UV radiation source emitting waves with wavelength below 240 nm, while in the further part of the duct, along the whole length of the ventilation system, the air is exposed to UV radiation generated by weaker sources emitting radiation with wavelength above 240nm and distributed at equal distance from each other.

In turn, the essence of the idea of construction of the ventilation system duct with bactericidal and fungicidal properties made of tubular elements inner surfaces of which are covered with a layer of a silver oxide or titanium oxide or zinc oxide with antiseptic properties and equipped with a UV radiation sources consists that in the vicinity of the duct's air inlet face and on its symmetry axis there is a source of UV radiation with wavelength below 240 nm, and after it, in the duct wall, there are UV radiation sources mounted with wavelength above 240nm distributed evenly along the whole length of the duct. It is preferable when a mercury discharge lamp with rated power of 200 W is used as the UV radiation source with wavelength below 240 nm, and LEDs preferably with rated power of 0.5-5 W are used as the UV radiation sources with wavelength above 240 nm. It is also preferable when the UV radiation sources are connected with the duct detachably by means of connectors in the form of flange bushings. It is also preferable that UV radiation sources constitute at least two diodes oriented at angle of 60° with respect to each other.

Equipping the ventilation system ducts inner surfaces of which are covered with a layer of a silver oxide or titanium oxide or zinc oxide, with UV radiation sources with intentionally selected power, wavelength, distance from the air inlet, and mutual distances between them, has amplified significantly the effect of the metallic coating alone resulting in complete elimination of fungi, bacteria and other microorganisms accumulating in the systems. Metallic coatings of the ducts not only cause decomposition of ozone O₃ produced by the strong UV radiation source with wavelength below 240 nm mounted at the duct inlet into O₂ particles, but also UV radiation coming from further sources emitting rays with wavelength 240-280 nm and reflected from the metallic coating eliminates all living organisms even at large distances for the sources, while ozone, as a strong oxidizer, increases effectiveness of elimination of these organisms from air. In turn, the use of UV radiation sources with lower power of the order of 0,5-5 W, despite low intensity of the sources, ensures in the longer period of operation also the required effectiveness of elimination of the microorganisms and degradation of contamination existing in the ducts, as with larger wavelengths of the radiation, i.e. 240-280 nm, ozone is not produced, while such UV rays are still effective in eliminating microorganisms. Moreover, the method according to the invention allows also to use radiation sources in the form of LEDs with power exceeding 5 W, which will allow to arrange them at larger distance from each other compared to diodes with lower power. An advantage of using LEDs in ventilation ducts is their small size - they do not affect negatively the air flow as they neither pose any large flow resistance nor generate noise in the ventilation system, and moreover, LEDs emit radiation in narrow wavelength band. It is therefore possible to select them in such a way that, depending on needs, they will generate ozone or not.

An additional advantage of the method and the ventilation system duct according to the method is the complete sterilization of air in ventilated rooms of the building and elimination of unpleasant odors penetrating the rooms together with the air drawn in from outside by the ventilation device, which is of great significance in hospitals and laboratories in which rendering the air sterile is particularly important.

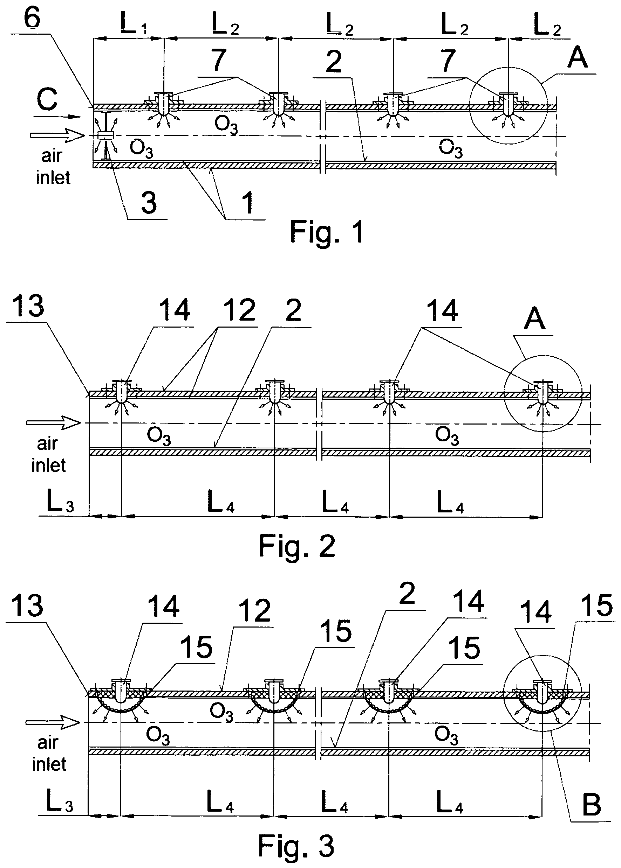

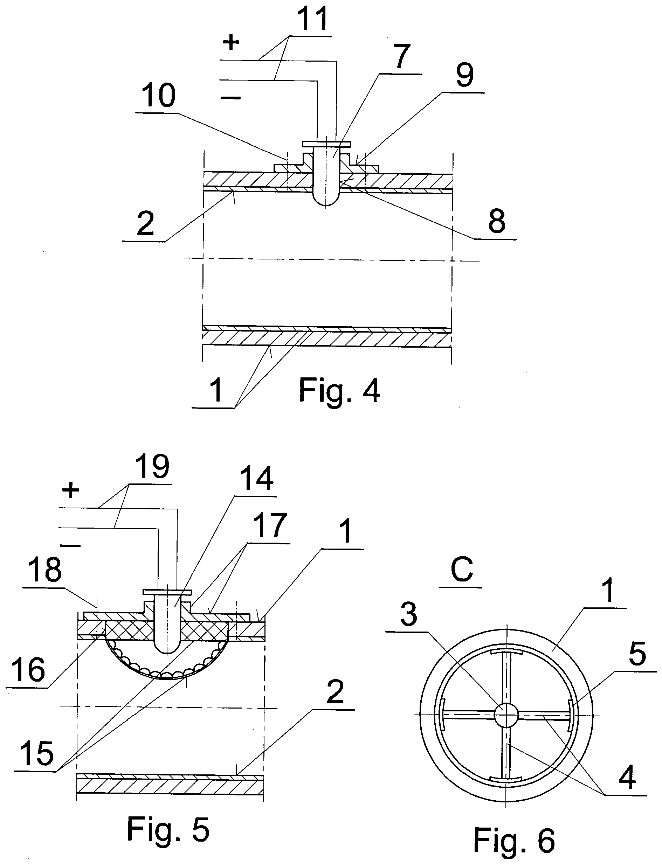

The subject of the invention is explained in more detail by means of its example embodiments shown in pictures representing schematically ducts of ventilation systems equipped with different technical measures used to give the ducts bactericidal and fungicidal properties, of which Fig. 1 presents a fragment of a ventilation system duct quipped with UV radiation source producing ozone and LEDs emitting UV radiation; Fig. 2 - a fragment of a ventilation system duct equipped only with low power LEDs emitting UV radiation; Fig. 3 - a fragment of a ventilation system duct equipped only with low power LEDs emitting UV radiation and optical units ensuring uniform intensity of the radiation; Fig. 4 - detail "A" of Fig. 1 illustrating the method of assembling a LED to the ventilation duct; Fig. 5 - detail "B" of Fig. 3 illustrating the method of assembling the optical unit to the ventilation duct; and Fig. 6 - detail "C" illustrating the method of assembling the strong radiation source in the form of a mercury discharge lamp in the ventilation system duct.

### Example 1

As shown in Fig. 1, at inlet of a ventilation system duct (1) with diameter of 200 mm inner surface of which was earlier covered electrolytically with a layer (2) of zinc oxide, a mercury discharge lamp (3) with rated power of 200 W was mounted on axis of the duct by means of four transverse brackets (4) and their feet (5) evenly located along circumference of the duct, and then the lamp was connected to the electric power supply network 230 V. Next, at a distance of *L*₁ *=* 5 m from the face (6) of air inlet to the ventilation duct (1) and further at the distance of *L*₂ = 5 m from each other inside the duct along the whole of its length, LEDs (7) with rated power of 5 W emitting UV radiation with wavelength equaling 280 nm were mounted in holes (8) made earlier in walls of the duct and oriented perpendicularly to its main axis by means of bushing connectors with flanges (9) connected to the outer surface of the duct by means of fastening screws (10), and LEDs (7) by means of power leads (11) were connected to the source of direct current not shown in the figure. After switching on the electric power supply for the mercury discharge lamp (3) and LEDs (7) spaced 5 m apart along the whole duct (1) of the ventilation system, the lamp become a UV radiation source emitting waves with length below 240 nm and causing generation of ozone (O₃) with high concentration at the air inlet to the duct that, as a very strong oxidizer, caused significant elimination of living organisms supplied with the air drawn into the duct. Next, LEDs (7) with rated power of 2 W emitting electromagnetic radiation with wavelength equaling 280 nm, spaced 5 m apart along the whole length of the duct, caused significant decrease of concentration of ozone with toxic properties until complete elimination of its existence, while the existing UV radiation and the inner surface of duct (1) of the ventilation system covered with a layer (2) of zinc oxide caused effective elimination of fungi and bacteria existing in the duct.

### Example 2

At inlet of a ventilation system duct (1) with rectangular cross section with dimensions 200 mmx400 mm inner surface of which was earlier covered by means of the magnetron spraying method with a layer (2) of titanium oxide, a sodium discharge lamp (3) with rated power of 250 W was mounted by means of method analogous to this described in Example 1, and along the duct, LEDs (7) with rated power of 2 W were mounted emitting UV radiation with wavelength equaling 280 nm. Also in this case, UV radiation generated by the sodium discharge lamp (3) and LEDs (7) together with the titanium oxide layer (2) deposited on the inner surfaces of the ventilation system duct (1) caused complete elimination of all microorganisms existing in the duct, including fungi and bacteria. In this case, the use of titanium oxide layer applied by means of magnetron method both improved significantly the photocatalysis and caused fast decomposition of ozone O₃ particles produced by the sodium discharge lamp (3) into oxygen particle O₂.

### Example 3

At inlet of a ventilation system duct (1) of with diameter of 200 mm, inner surface of which was earlier covered electrolytically with a layer (2) of silver oxide, a mercury discharge lamp (3) with rated power of 200 W was mounted on axis of the duct by means of four transverse brackets (4) with their feet (5) evenly arranged along circumference of the duct, and the lamp was connected to the electric power supply network 230 V. Next, at a distance of *L*₁ = 5 m from the face (6) of air inlet to the ventilation duct (1) and further at the distance of *L*₂ = 5 m from each other inside the duct along the whole of its length, LEDs (7) with rated power of 5 W emitting UV radiation with wavelength equaling 280 nm were mounted in holes (8) made earlier in walls of the duct and oriented perpendicularly to its main axis by means of bushing connectors with flanges (9) connected to the outer surface of the duct by means of fastening screws (10), and LEDs (7) by means of power leads (11) were connected to the source of direct current not shown in the figure. After switching on the electric power supply for the mercury discharge lamp (3) and LEDs (7) spaced 5 m apart along the whole duct (1) of the ventilation system, the lamp become a UV radiation source emitting waves with length below 240 nm and causing generation of ozone (O₃) with high concentration at the inlet of air to the duct and constituting a very strong oxidizer causing significant elimination of living organisms transported with the air supplied to the duct. Next, LEDs (7) with rated power of 5 W emitting electromagnetic radiation with wavelength equaling 240 nm, mounted every 5 m along the whole length of the system, caused significant reduction of concentration of ozone with toxic properties until complete elimination of its existence, while the existing UV radiation and the inner surface of duct (1) of the ventilation system coated with a layer (2) of zinc oxide resulted in effective elimination of fungi and bacteria existing therein.

Also in this case UV radiation generated both by the mercury discharge lamp (3) and the LEDs (7) supported the layer (2) of silver oxide applied onto inner surface of duct (1) of ventilation system to such extent that fungi and bacteria were completely eliminated along the whole length of the system.

### Comparative Example 4

Along the whole length of a ventilation system duct (12) made of galvanized metal sheet inner walls of which were covered, by means of the magnetron method, with a layer (2) of titanium oxide at a distance of *L*₃ = 1 m from the duct face (13) a LED (14) was mounted with rated power of 0.5 W, and further at the distance *L*₄ = 3 m from it and L₄ spaced apart, subsequent analogous LEDs (14) were arranged emitting UV radiation with wavelength of 255 nm, with the diodes connected to the duct (12) analogously as described in Example 1. Despite small intensity of the sources, a longer period of exposure to their radiation ensured effective elimination of microorganisms and degradation of contaminants.

### Comparative Example 5

Along the whole length of a ventilation system duct (12) made also of galvanized sheet metal inner surfaces of which were also coated, by means of magnetron method, with a layer (2) titanium oxide, UV radiation uniform distribution units were mounted evenly at distance *L*₄ = 3 m from each other, with each such unit comprising a LED (14) with rated power of 1 W emitting UV radiation with wavelength 240 nm and a lens (15) diverging the light in the form of a cylindrical-spherical lens, where the first of such units was mounted at a distance *L*₃ = 1.5 m from the front face (13) of the air inlet to the duct. Also analogously as in Example 1, LEDs (14) equipped with lenses (15) were mounted in holes (16) made earlier in walls of the duct and oriented perpendicularly to its main axis by means of bushing connectors with flanges (17) connected to the outer surface of the ducts by means of fastening screws (18), where the diodes by means of power leads (19) were connected to a direct current source not shown in the picture.

In this case, the use of UV radiation distribution units each of which comprised a LED (14) and a lens (15) allowed to apply the method in large buildings in which ventilation systems are even several hundred meters long, because thanks to the distribution units, high intensity of the radiation was obtained and in significantly larger range of distances from the light sources. This in turn allowed to minimize the number of UV radiation sources.

### In Comparative Example 6

In another example embodiment of a ventilation system duct inner surface of which was coated, by means of magnetron spraying, with a layer of silver oxide, not shown in the figure, pairs of LEDs oriented with respect to each other at angle 60° with rated power of 1 W emitting radiation with wavelength of 270 nm were mounted along the whole length of the duct analogously as described in Example 1 which resulted in presence of UV radiation along the whole circumference of the ventilation system duct.

## Claims

1. A method of giving bactericidal and fungicidal properties to ducts of ventilation systems made of tubular elements inner surfaces of which are covered with a thin layer of a silver oxide or titanium oxide or zinc oxide with antiseptic properties and equipped with a source of UV radiation to which the air drawn into these ducts is exposed **characterized in that** the air drawn in at inlet to the ventilation system duct (1) is exposed to UV radiation producing ozone emitted by a strong source (3) of such radiation with wavelength below 240 nm, and in the further part of the duct along the whole length of the system the air is exposed to UV radiation of weaker sources (7) generating the radiation with wavelength above 240 nm and arranged at equal distance L2 from each other.

2. A duct of a ventilation system with bactericidal and fungicidal properties made from tubular elements inner surfaces of which are coated with a thin layer of a silver oxide or titanium oxide or zinc oxide with antiseptic properties and equipped with a UV radiation with a source of UV radiation to which the air drawn into these ducts is exposed **characterized in that** in the vicinity of face (6) of the air inlet to the duct (1) and on its symmetry axis there is a source (3) of UV with wavelength below 240 nm mounted and after said source, in wall of the duct (1) there are separately mounted sources (7) of UV radiation with wavelength above 240nm spaced evenly along the whole of its length, and arranged at equal distance L2 from each other.

3. The duct of ventilation system according to Claim 2 **characterized in that** as the UV radiation source (3) with wavelength below 240 nm, a mercury discharge lamp is used with rated power of 200 W.

4. The duct of ventilation system according to Claim 2 **characterized in that** as UV radiation sources (7) with wavelength above 240nm, LEDs are used, with rated power of 0.5-5 W.

5. The duct of ventilation system according to Claim 2 or 4 **characterized in that** UV radiation sources (7) are connected with the duct (12) detachably by means of connectors (9 and 17) in the form of flanged bushings.

6. The duct of ventilation system according to Claims from 2 or 4 **characterized in that** UV radiation sources (7) comprise at least two diodes oriented with respect to each other at angle 60°.

## Patentansprüche

1. Das Verfahren zur Vergabe von bakteriziden und fungiziden Eigenschaften den aus Rohrteilen gefertigten Lüftungsleitungskanälen, deren Innenflächen mit einer dünnen Schicht des Silberoxides oder Titanoxides bzw. des Zinkoxides mit antiseptischen Eigenschaften überzogen sind, und die mit einer Quelle der UV-Strahlung ausgerüstet sind, der die zu diesen Kanälen angesaugte Luft ausgesetzt wird, **dadurch gekennzeichnet, dass** die am Einlauf des Lüftungsleitungskanals (1) angesaugte Luft der Wirkung der durch eine starke Quelle (3) ausgestrahlten, Ozon erzeugenden UV-Strahlung mit der Wellenlänge unterhalb 240 nm ausgesetzt wird, und diese Luft im weiteren Teil dieses Kanals, über die gesamte Länge dieser Leitung, der Wirkung der UV-Strahlung aus schwächeren Quellen (7) ausgesetzt wird, welche die Strahlung mit der Wellenlänge von oberhalb 240 nm ausstrahlen und in gleichen Abständen L2 voneinander aufgestellt sind.

2. Das Lüftungsleitungskanal mit den bakteriziden und fungiziden Eigenschaften, aus Rohrteilen gefertigt, deren Innenflächen mit einer dünnen Schicht des Silberoxides oder Titanoxides bzw. des Zinkoxides mit antiseptischen Eigenschaften überzogen sind, und die mit einer Quelle der UV-Strahlung ausgerüstet sind, der die zu diesen Kanälen angesaugte Luft ausgesetzt wird, **dadurch gekennzeichnet, dass** in der Nähe der Stirnseite (6) des Lufteinlasses im Kanal (1) und in seiner Symmetrieachse eine Quelle (3) der UV-Strahlung mit der Wellenlänge unterhalb 240 nm montiert ist und hinter der erwähnten Quelle in der Kanalwand (1) die Quellen (7) der UV-Strahlung mit der Wellenlänge oberhalb 240 nm trennbar montiert sind, gleichmäßig über die gesamte Länge angeordnet und in gleichen Abständen L2 voneinander aufgestellt.

3. Das Lüftungsleitungskanal nach dem Anspruch 2, **dadurch gekennzeichnet, dass** als die Quelle der UV-Strahlung (3) mit der Wellenlänge unterhalb 240 nm die Quecksilberdampf-Entladungslampe mit der Leistung von 200 W verwendet wird.

4. Das Lüftungsleitungskanal nach dem Anspruch 2, **dadurch gekennzeichnet, dass** als die Quelle der UV-Strahlung (7) mit der Wellenlänge oberhalb 240 nm die Leuchtdioden mit der Leistung von 0,5-5 W verwendet werden.

5. Das Lüftungsleitungskanal nach dem Anspruch 2 oder 4, **dadurch gekennzeichnet, dass** die Quellen der UV-Strahlung (7) mit dem Kanal (12) über die Verbinder (9 und 17) in Form von Flanschbuchsen trennbar verbunden werden.

6. Das Lüftungsleitungskanal nach dem Anspruch 2 oder 4, **dadurch gekennzeichnet, dass** die Quellen der UV-Strahlung (7) aus mindestens zwei Dioden, die in einem Winkel von 60° zueinander gerichtet sind, bestehen.

## Revendications

1. La méthode consistant à conférer des propriétés bactéricides et fongicides aux gaines de système de ventilation faites d'éléments tubulaires, dont les surfaces intérieures sont couvertes d'une couche mince d'oxyde d'argent ou d'oxyde de titane ou d'oxyde de zinc ayant des propriétés antiseptiques et équipées d'une source de rayons UV à laquelle est exposé l'air aspiré à ces gaines, **caractérisée par le fait que** l'air aspiré à l'entrée d'une gaine (1) du système de ventilation est exposé au rayonnement UV qui produit de l'ozone et qui est émis par une source puissante (3) de ce rayonnement de longueur d'onde en dessous de 240 nm, et dans la section suivante de cette gaine, le long de ce système, l'air est exposé au rayonnement UV des sources plus faibles (7) émis par ce rayonnement de longueur d'onde en dessus de 240 nm et arrangées à égales distances L2 les unes des autres.

2. La gaine de système de ventilation des propriétés bactéricides et fongicides faite d'éléments tubulaires, dont les surfaces intérieures sont couvertes d'une couche mince d'oxyde d'argent ou d'oxyde de titane ou d'oxyde de zinc ayant des propriétés antiseptiques et équipées d'une source de rayons UV à laquelle est exposé l'air aspiré à ces gaines, **caractérisée par le fait qu**'au voisinage d'une face (6) de l'entrée d'air à cette gaine (1) et dans l'axe de sa symétrie est localisée la source (3) de rayons UV de longueur d'onde en dessous de 240 nm, et derrière cette source dans un paroi de gaine (1) sont montées, séparément, les sources (7) de rayons UV de longueur d'onde en dessus de 240 nm localisées uniformément sur toute sa longueur et arrangées à égales distances L2 les unes des autres.

3. La gaine de système de ventilation selon la Revendication 2 **caractérisée par le fait que** pour la source (3) de rayons UV de longueur d'onde en dessous de 240 nm on utilise une lampe au mercure à décharge de puisssance 200 W.

4. La gaine de système de ventilation selon la Revendication 2 **caractérisée par le fait que** pour les sources (7) de rayons UV de longueur d'onde en dessus de 240 nm on utilise des diodes LED de puissance 0,5-5 W.

5. La gaine de système de ventilation selon la Revendication 2 ou 4 **caractérisée par le fait que** les sources de rayons UV (7) sont raccordées détachablement à une gaine (12) à l'aide des connecteurs (9 et 17) en forme de douilles à bride.

6. La gaine de système de ventilation selon la Revendication 2 ou 4 **caractérisée par le fait que** les sources de rayons UV (7) comprennent au moins deux diodes orientées par rapport l'une de l'autre, sous un angle 60°.
